# EUROPEAN PATENT APPLICATION

(11) **EP 3 846 363 A1**
(43) Date of publication of application: **07.07.2021**
(21) Application number: 18931521.1
(22) Date of filing: 12.12.2018
(51) Int. Cl.: H04J 1/00, H04B 3/02, H04B 13/00

(54) **COMMUNICATION SYSTEM**

(30) Priority: 28.08.2018 JP 2018159542
(71) Applicant: Teijin Limited, Osaka 530-0005 (JP)
(72) Inventor: TANABE Junko, Osaka-shi, Osaka 530-0005 (JP); NODA Akihito, Nagoya-shi, Aichi 466-8673 (JP)
(74) Representative: Small, Gary James
(86) International application number: PCT/JP2018/045743
(87) International publication number: WO 2020/044583

(57) **Abstract**

A communication circuit (320) generates a clock signal that is a digital signal corresponding to a serial clock, and a data signal that is a digital signal corresponding to serial data to be sent. A modulation circuit (330) generates a first modulated signal obtained by digital modulating a first carrier wave having a first frequency with the clock signal and second modulated signal obtained by modulating the second carrier wave having a second frequency different than the first frequency with the data signal, and applies the first modulated signal and the second modulated signal between a first conductor and a second conductor. A demodulation circuit (440) includes a buffer amplifier (441) that has high input impedance, demodulates the first modulated signal and the second modulated signal, and generates the clock signal and the data signal. The communication circuit (420) acquires serial data on the basis of the clock signal and the data signal.

## Description

### Technical Field

The present disclosure relates to a communication system.

### Background Art

Technologies are known in which sensors, actuators, and the like are attached to a clothing article to be worn by a human to collect information about the human body, apply vibrations to the human body, and the like. In some cases, a fiber structure is used in such a clothing article. This fiber structure supplies power to the sensors, actuators, and the like, and transmits information sent or received by the sensors, the actuators, and the like. In one example, the fiber structure is formed by knitting or weaving in conductive thread having electrical conductivity and non-conductive thread not having electrical conductivity. Patent Literature 1 discloses an example of such a fiber structure.

At least two mutually insulated conductors are required to realize the transmission of power and information. Accordingly, the fiber structure must include at least two mutually insulated conductive layers. One method for realizing communication among a plurality of communication devices using a simple configuration is a method that adopts serial communication using clock signals and data signals.

### Citation List

### Patent Literature

Patent Literature 1: Unexamined Japanese Patent Application Publication No. 2017-25432

### Summary of Invention

### Technical Problem

However, when there are only two conductors that can be used for communication, serial communication using clock signals and data signals cannot be readily adopted. In many cases, it is difficult to increase the number of conductive layers in order to realize such serial communication. Patent Literature 1 makes no mention of a method for realizing such serial communication using two conductors. Therefore, technology for realizing, using two conductors, serial communication using clock signals and data signals is desired.

The present disclosure is made with the view of the above situation, and an objective of the present disclosure is to provide a communication system that realizes, using two conductors, serial communication using clock signals and data signals.

### Solution to Problem

A communication system according to the present disclosure that achieves the objective described above is
a communication system including a plurality of communication devices that communicate via a first conductor and a second conductor, and a DC power supply that supplies DC power to the plurality of communication devices via the first conductor and the second conductor, wherein
a first communication device of the plurality of communication devices including:
   a signal generation circuit that generates a clock signal that is a digital signal corresponding to a serial clock, and a data signal that is a digital signal corresponding to serial data to be sent,
   a first oscillation circuit that generates a first carrier wave having a first frequency,
   a second oscillation circuit that generates a second carrier wave having a second frequency different than the first frequency, and
   a modulation circuit that generates a first modulated signal obtained by digital modulating the first carrier wave with the clock signal and second modulated signal obtained by modulating the second carrier wave with the data signal, and applies the first modulated signal and the second modulated signal between the first conductor and the second conductor, and
a second communication device different from the first communication device of the plurality of communication devices that is different from the first communication device, the second communication device including
   a demodulation circuit that includes a buffer amplifier that has high input impedance and that is connected to the first conductor and the second conductor, demodulates the first modulated signal and the second modulated signal applied between the first conductor and the second conductor, and generates the clock signal and the data signal, and
   a data acquisition circuit that acquires the serial data on the basis of the clock signal and the data signal generated by the demodulation circuit.

The communication system may further include a fiber structure including a first conductive layer that has conductivity and that includes the first conductor, a second conductive layer that has conductivity and that includes the second conductor, and an insulation layer that insulates the first conductive layer and the second conductive layer.

The communication system may further include a clothing article including the fiber structure.

A first wavelength that is a wavelength of the first carrier wave and a second wavelength that is a wavelength of the second carrier wave may be longer than a length between two points that are separated farthest from each other on the fiber structure.

The communication system may further include a filter circuit that is provided parallel to a capacitor including the first conductive layer and the second conductive layer, and that increases a parallel combined impedance between both ends of the capacitor at the first frequency and the second frequency.

The communication system may further include an integration module that includes a third communication device of the plurality of communication devices, a communication target device that communicates with the third communication device, the communication target device being one selected from an actuator, a light emitting device, and a sensor, a circuit board on which the third communication device and the communication target device are mounted, and an attachment member for attaching the circuit board to the fiber structure, wherein
the attachment member includes
   a tack constituted by a conductor, the tack being inserted into the fiber structure from a side of the first conductor toward a side of the second conductor, and
   a fixed member fixed to a protrusion of the tack on the side of the second conductor,
the tack includes a first electrode that contacts the first conductive layer,
the fixed member includes a second electrode that contacts the second conductive layer, and a socket into which the protrusion of the tack is inserted, and
the circuit board is connected to the first conductive layer via the first electrode and possible in which the and is connected to the second conductive layer via the second electrode.

A mesh-like opening may be formed in the second conductive layer, and
the tack may be inserted into the fiber structure so as to penetrate the opening and be insulated from the second conductive layer.

A portion of the tack may be covered with an insulator, and
the insulator may contact the second conductive layer, and the tack may be insulated from the second conductive layer.

### Advantageous Effects of Invention

According to the present disclosure, serial communication using clock signals and data signals can be realized using two conductors.

### Brief Description of Drawings

FIG. 1 is a configuration drawing of a clothing article according to Embodiment 1 of the present disclosure;
FIG. 2 is a disassembled perspective view of a fiber structure according to Embodiment 1 of the present disclosure;
FIG. 3 is a perspective view of an integration module according to Embodiment 1 of the present disclosure;
FIG. 4 is a cross-sectional view of an attachment member according to Embodiment 1 of the present disclosure;
FIG. 5 is a configuration drawing of a communication system according to Embodiment 1 of the present disclosure;
FIG. 6 is a drawing illustrating the manner in which a clock signal changes;
FIG. 7 is a drawing illustrating the manner in which a data signal changes;
FIG. 8 is a circuit diagram of a communication circuit including a filter circuit provided in parallel with a capacitor;
FIG. 9 is a drawing illustrating the relationship between the frequency of a carrier wave and the impedance between both ends of the capacitor;
FIG. 10 is a cross-sectional view of an attachment member according to Embodiment 2 of the present disclosure;
FIG. 11 is a configuration drawing of a communication system according to Embodiment 3 of the present disclosure; and
FIG. 12 is a configuration drawing of a communication system according to Embodiment 4 of the present disclosure.

### Description of Embodiments

Hereinafter, embodiments of the present disclosure are described while referencing the drawings. Note that, in the drawings, identical or corresponding components are denoted with the same reference numerals.

### Embodiment 1

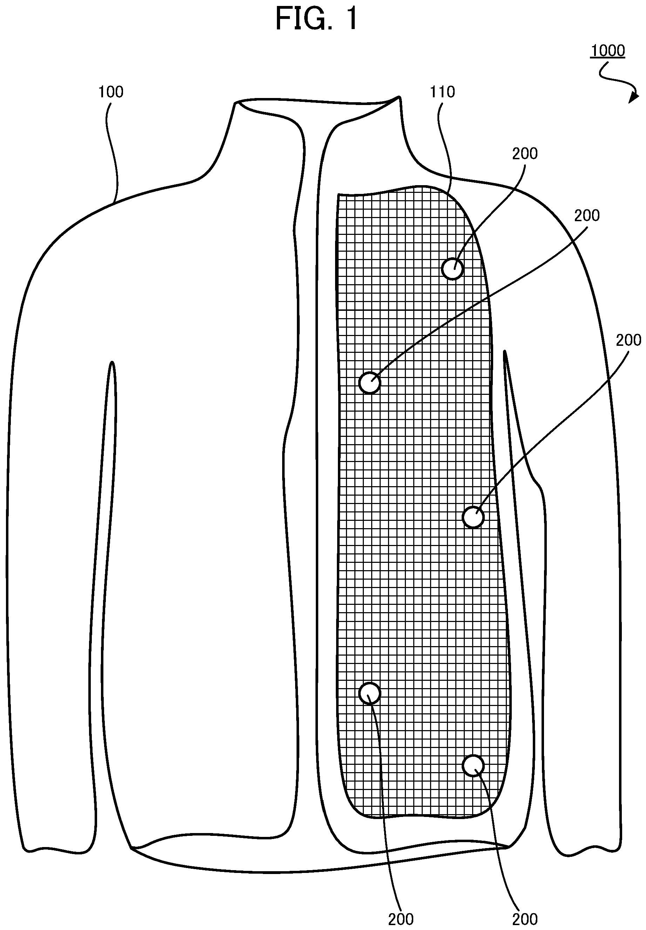

Firstly, a clothing article 100 according to some embodiments of the present disclosure is described while referencing FIG. 1. Note that the clothing article 100 is a part of a communication system 1000 according to some embodiments of the present disclosure. The clothing article 100 is used to apply vibrations to a human body, collect information about the human body, and the like. In the present embodiment, the clothing article 100 is used to apply vibrations to a human body. In the present embodiment, the clothing article 100 is a garment. However, the clothing article 100 may be a hat, gloves, a supporter, shoes, or the like.

As illustrated in FIG. 1, the clothing article 100 includes a fiber structure 110. The fiber structure 110 is a structure that is constituted by fiber. The fiber structure 110 is a wearable transmission sheet that supplies power, transmits information, and the like. The fiber structure 110 may be used as the material of the clothing article 100, or may be attached to an existing clothing article 100 and used. FIG. 1 illustrates an example in which the fiber structure 110 is provided on only one side of the front surface of the clothing article 100. However, the fiber structure 110 may, of course, be provided at a plurality of locations of the clothing article 100.

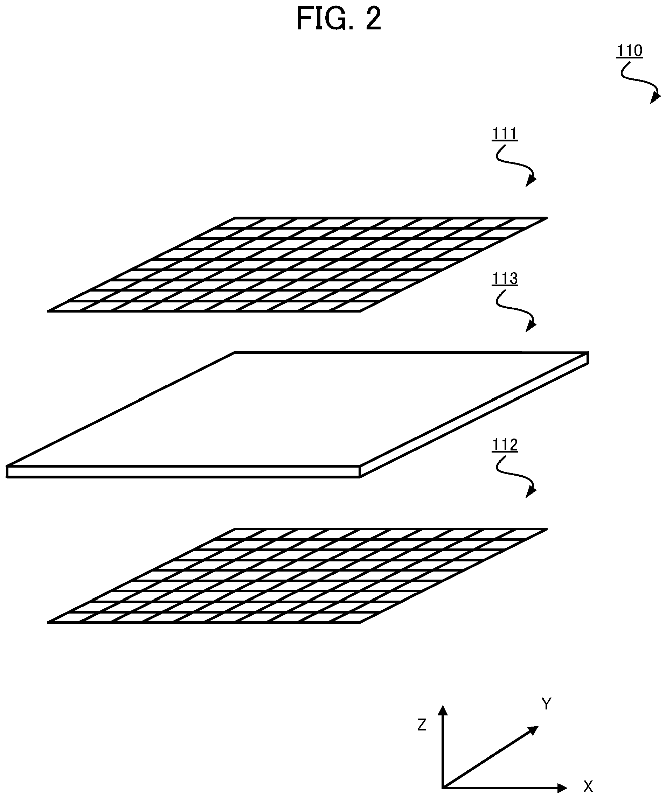

As illustrated in FIG. 2, the fiber structure 110 is basically formed by laminating a conductive layer 111, an insulation layer 113, and a conductive layer 112 in this order. The conductive layer 111 and the conductive layer 112 include conductors and are electrically conductive layers. The conductive layer 111 and the conductive layer 112 function as media that transmit power and information. In the present embodiment, the conductive layer 111 and the conductive layer 112 include mesh-like openings and, when viewed planarly, the conductive layer 111 and the conductive layer 112 have a lattice pattern. Note that the size of the openings, the interval of the openings, the pattern, and the like are appropriate adjusted in accordance with the application of the fiber structure 110, the power supply voltage, the signal voltage, the frequency of the signal, the maximum transmission distance, and the like. In the present embodiment, the conductive layer 112 is set to the ground potential, and power supply voltage for supplying power and signals for transmitting information are applied to the conductive layer 111. In one example, the conductive layer 111 and the conductive layer 112 are constituted from conductive thread that has electrical conductivity. However, the conductive layer 111 and the conductive layer 112 may, for example, may be formed by printing conductive ink or plating metal on a fabric constituted from non-conductive thread that does not have electrical conductivity.

The conductive thread is a thread that includes a conductor. In one example, the conductor is a substance that has a specific resistance (also called "volume resistivity") of less than 10⁸ Ω·cm. The conductive thread may be a metal fiber constituted from a metal such as copper, stainless steel, or the like, or may be a carbon fiber constituted from carbon. Additionally, the conductive thread may be a thread that is obtained by coating a synthetic fiber with a metal by sputtering or plating. Alternatively, the conductive thread may be a thread that is obtained by kneading a conductive substance such as metal powder, conductive polymer, or the like into a synthetic fiber. Meanwhile, the non-conductive thread is a thread that does not include a conductor. For example, the non-conductive thread is a natural fiber, a synthetic fiber, a semi-synthetic fiber, an inorganic fiber, or the like.

The insulation layer 113 functions as a layer for insulating the conductive layer 111 and the conductive layer 112 from each other. Accordingly, the insulation layer 113 is disposed between the conductive layer 111 and the conductive layer 112. Here, it is undesirable that the conductive layer 111 and the conductive layer 112 contact each other because, in such a case, not only will it become unable to supply power, transmit information, or the like, but a large current may flow and heat may be generated. As such, in the present embodiment, a thickness of the insulation layer 113 is made thick enough so that the conductive layer 111 and the conductive layer 112 do not contact each other. In one example, the insulation layer 113 is constituted from the non-conductive thread that does not have electrical conductivity.

The conductive layer 111, the conductive layer 112, and the insulation layer 113 may be integrally formed by knitting or weaving, or may be formed separately and fixed to each other. Examples of fixing methods include sewing using non-conductive thread, adhesion using an adhesive, affixing using double-sided tape, and the like. The fiber structure 110 is basically constituted from the conductive thread and the non-conductive thread and, as such, is very flexible.

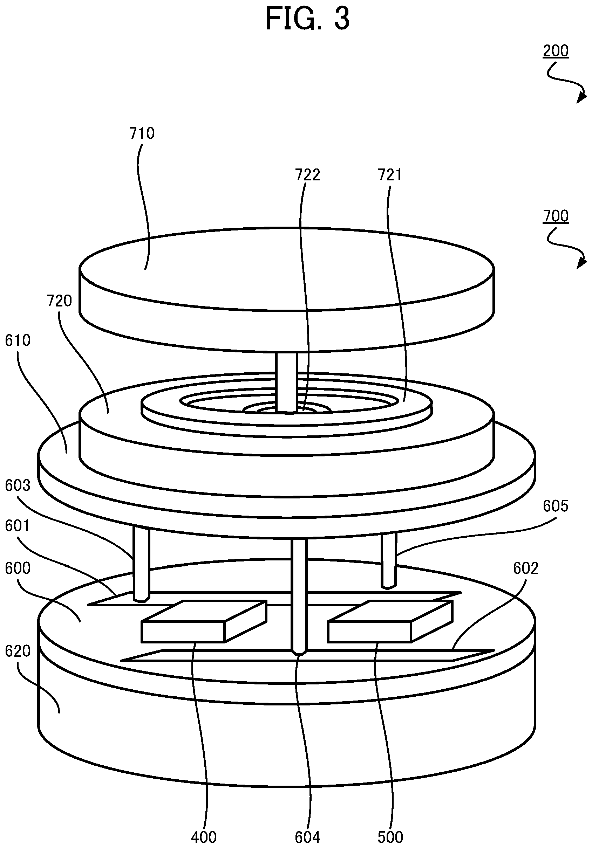

A plurality of integration modules 200 is attached to the fiber structure 110. As described later, the integration module 200 is a module that integrates devices, boards, members, and the like. Hereinafter, the configuration of the integration module 200 is described while referencing FIG. 3. As illustrated in FIG. 3, the integration module 200 includes a communication device 400, a communication target device 500, a circuit board 600, a relay board 610, a support member 620, and an attachment member 700.

The communication device 400 communicates with a communication device 300 that is described later, and communicates with the communication target device 500. In the present embodiment, the communication device 300 and the communication device 400 include a half-duplex serial bus interface corresponding to an inter integrated circuit (I2C), and I2C communication is possible. I2C communication is a communication system in which one master communicates with one or more slaves using a serial clock (SCL) that is a serial clock line and serial data (SDA) that is a serial data line. In the present embodiment, the communication device 300 is the master, and the communication device 400 is a slave.

The SCL is a signal line used for synchronization. The SDA is a signal line that is synchronized with the SCL, and is used to transmit data. In the present embodiment, the state of the SCL and the state of the SDA are controlled by the master. The SCL and the SDA are set by the master to H-level (power supply potential, namely Vcc) or L-level (ground potential, namely 0 V). Note that, in typical I2C communication, when a slave notifies a busy state, the state of the SCL is sometimes controlled by the slave, but this feature is not used in the present embodiment. Additionally, in typical I2C communication, when a slave sends data or sends an ACK, the state of the SCL is sometimes controlled by the slave, but this feature is not used in the present embodiment. Moreover, in typical I2C communication, both the SCL and the SDA are open collector connections or open drain connections, and the signal line is pulled up to the power supply voltage via a resistor. However, in the present embodiment, for example, an output terminal of the SCL and an output terminal of the SDA are pulled up to the power supply voltage via a resistor in a switch control circuit 333, and are output as H-level or L-level voltage.

Typically, in I2C communication, the master and the slaves are connected to each other by the SCL, the SDA, and the ground line. However, in the present embodiment, the communication device 300 and the communication device 400 are connected to each other by the conductive layer 111 and the conductive layer 112. Here, the conductive layer 112 fulfills a role as the ground line. As such, in the present embodiment, both the data to be sent using the SCL and the data to be sent using the SDA must be sent using the conductive layer 111. Therefore, in the present embodiment, a system is adopted in which two carrier waves having different frequencies are each modulated with two pieces of data, and the two modulated signals obtained by the modulating are superimposed on the conductive layer 111.

In the present embodiment, the communication target device 500 is an actuator. Accordingly, it is sufficient that the communication device 400 controls the communication target device 500 on the basis of data received from the communication device 300. Therefore, the communication device 400 does not need to receive data from the communication target device 500 and send the received data to the communication device 300. As such, the communication device 400 includes a function for receiving data from the communication device 300, but does not include a function for sending data to the communication device 300. Note that the communication device 400 does not include a function for sending an ACK to the communication device 300 and a function for notifying a busy state, and it is sufficient that the communication device 300 not use these functions. As described above, the communication device 400 controls the communication target device 500 on the basis of data received from the communication device 300.

The communication target device 500 is a communication target of the communication device 400, and is controlled by the communication device 400. As described above, in the present embodiment, the communication target device 500 is an actuator. Accordingly, the communication target device 500 vibrates in accordance with commands from the communication device 400, and applies vibration to the human body of the wearer of the clothing article 100.

The circuit board 600 is a circuit board on which the communication device 400 and the communication target device 500 are mounted. The circuit board 600 includes an electrode 601 and an electrode 602. The electrode 601 is connected to the conductive layer 111 via an electrical wire 603. The electrode 602 is connected to the conductive layer 112 via an electrical wire 604. The circuit board 600 supplies DC power to the communication device 400 and the communication target device 500 via the electrode 601 and the electrode 602. Additionally, the circuit board 600 supplies signals to the communication device 400 via the electrode 601 and the electrode 602.

The relay board 610 relays the connection between the conductive layer 111 and the electrode 601 and the connection between the conductive layer 112 and the electrode 602. The relay board 610 supports the attachment member 700 described later and also is fixed to the circuit board 600 by the electrical wire 603, the electrical wire 604, and an electrical wire 605. The relay board 610 connects the conductive layer 111 to the electrode 601 by connecting a socket 722 described later to the electrical wire 603. Additionally, the relay board 610 connects the conductive layer 112 to the electrode 602 by connecting an electrode 721 described later to the electrical wire 604.

The support member 620 is a member that supports the circuit board 600, and serves as a base of the entire integration module 200. The attachment member 700 is a member for attaching the integration module 200 to the fiber structure 110. The attachment member 700 includes a tack 710 and a fixed member 720.

The tack 710 is a member that is inserted into the fiber structure 110 from a first conductive layer side toward a second conductive layer side. In one example, the first conductive layer is the conductive layer 111. In one example, the second conductive layer is the conductive layer 112. However, the first conductive layer may be the conductive layer 112 and the second conductive layer may be the conductive layer 111. The tack 710 is constituted by a conductor. The tack 710 includes a first electrode and a protrusion 712. The first electrode is a portion that contacts the first conductive layer when the tack 710 is inserted into the fiber structure 110. In one example, the first electrode is an electrode 711. The electrode 711 is a portion of back surface of the umbrella-like part of the tack 710. The protrusion 712 is a portion that protrudes from the second conductive layer when the tack 710 is inserted into the fiber structure 110.

The fixed member 720 fixes to the protrusion 712 of the tack 710 on the second conductor layer side. The fixed member 720 includes a second electrode and a socket 722. The second electrode contacts the second conductive layer. In one example, the second electrode is an electrode 721. The electrode 721 is constituted by a conductor. The protrusion 712 of the tack 710 is inserted into the socket 722. The socket 722 is constituted by a conductor.

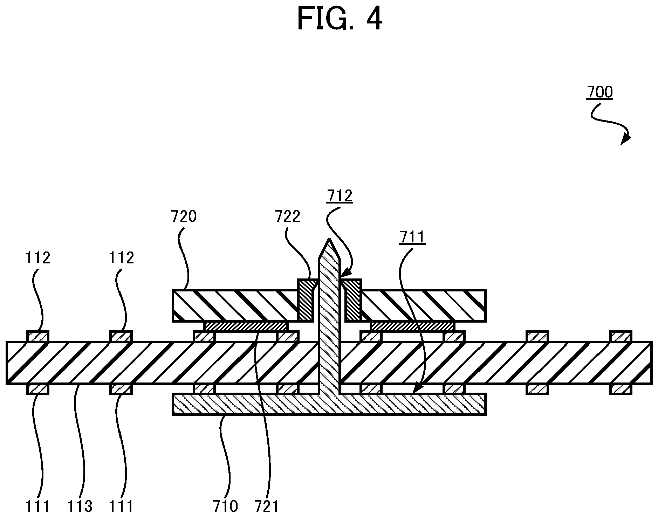

FIG. 4 illustrates a situation in which the tack 710 inserted into the fiber structure 110 is fixed by the fixed member 720, and the integration module 200 is fixed to the fiber structure 110. FIG. 4 is a cross-sectional view of the tack 710 and the fiber structure 110, taken along a cross-section including a center axis of the protrusion 712 of the tack 710.

Firstly, the tack 710 is inserted into the fiber structure 110 so as to pass through an opening of the conductive layer 112 from the conductive layer 111 side toward the conductive layer 112 side. Specifically, the tack 710 is inserted into the fiber structure 110 from the conductive layer 111 side so as to avoid the conductive layer 112. As the insertion of the tack 710 progresses, the tack 710 penetrates the fiber structure 110, and the protrusion 712 of the tack 710 protrudes to the conductive layer 112 side. Then, when the insertion of the tack 710 progresses from here, the electrode 711 of the tack 710 contacts the conductive layer 111, and further insertion of the tack 710 is prevented.

Here, the fixed member 720 is pressed against the fiber structure 110 from the conductive layer 112 side such that the protrusion 712 of the tack 710 is inserted into the socket 722 of the fixed member 720. Then, the protrusion 712 of the tack 710 is inserted into the socket 722 of the fixed member 720. At this time, the protrusion 712 contacts the socket 722, and the tack 710 is supported by the fixed member 720. Here, when the fixed member 720 is further pressed against the fiber structure 110, the electrode 721 of the fixed member 720 contacts the conductive layer 112, and movement of the fixed member 720 is suppressed.

Thus, when the protrusion 712 that penetrates the fiber structure 110 is fitted into the socket 722, the tack 710 and the fixed member 720 are fixed to each other in a state in which the tack 710 and the fixed member 720 sandwich the fiber structure 110. When the tack 710 and the fixed member 720 are fixed, the attachment member 700 is fixed to the fiber structure 110 and, as a result, the integration module 200 is fixed to the fiber structure 110.

At this time, the electrode 711 contacts the conductive layer 111, and the protrusion 712 contacts the socket 722. Here, the socket 722 is connected to the electrode 601 via the relay board 610 and the electrical wire 603. That is, the circuit board 600 is connected to the conductive layer 111 via the electrode 711 and the socket 722. Additionally, the electrode 721 contacts the conductive layer 112. Moreover, the electrode 721 is connected to the electrode 602 via the relay board 610 and the electrical wire 604. That is, the circuit board 600 is connected to the conductive layer 112 via the electrode 721.

An example in which the integration module 200 includes the communication device 400 is described above. The attaching of the integration module 200 to the fiber structure 110 is the same when the integration module 200 includes the communication device 300 and also when the integration module 200 includes a DC power supply 380. Note that, when the integration module 200 includes the communication device 300, the integration module 200 includes the communication device 300 instead of the communication device 400, and does not include the communication target device 500. Additionally, when the integration module 200 includes the DC power supply 380, the integration module 200 includes the DC power supply 380 instead of the communication device 400 and the communication target device 500. In the present embodiment, the integration module 200 includes the communication device 300 and the DC power supply 380.

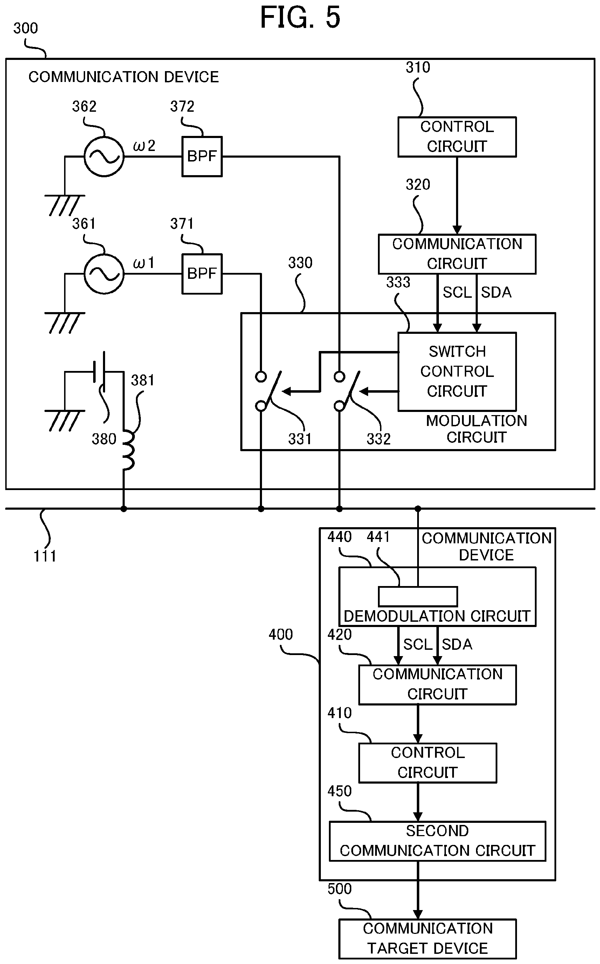

Next, a detailed description of the configuration of the communication system 1000 is given while referencing FIG. 5. As illustrated in FIG. 5, the communication system 1000 includes at least the communication device 300, the communication device 400, the communication target device 500, and the conductive layer 111. The communication device 300 functions as the master, and the communication device 400 functions as a slave. In one example, a first communication device corresponds to the communication device 300. In one example, a second communication device corresponds to the communication device 400. Note that, in the present embodiment, both the communication device 300 and the communication device 400 are a third communication device and are organized together with the circuit board 600 and the attachment member 700 as the integration module 200. The communication target device 500 is controlled by the communication device 300 via the communication device 400. A modulated signal corresponding to the SCL and a modulated signal corresponding to the SDA are superimposed on the conductive layer 111.

The communication device 300 includes a control circuit 310, a communication circuit 320, a modulation circuit 330, an oscillation circuit 361, an oscillation circuit 362, a bandpass filter 371, a bandpass filter 372, the DC power supply 380, and an inductor 381.

The control circuit 310 controls the operations of the entire communication device 300. For example, the control circuit 310 supplies serial data to the communication circuit 320. This serial data is serial data to be sent and, specifically, is serial data to be sent to the communication device 400 in order to control the communication target device 500.

The communication circuit 320 is a communication circuit for realizing I2C communication. The communication circuit 320 generates a first clock signal and a first data signal. That is, the communication circuit 320 is a signal generation circuit. The first clock signal is a digital signal corresponding to a serial clock. The first data signal is a digital signal corresponding to serial data to be sent. Note that, in one example, the first clock signal is a signal that alternately demonstrates an H-level representing the power supply potential (Vcc) and an L-level representing the ground potential (0 V). Additionally, in one example the first data signal is a signal that demonstrates the H-level representing the power supply potential (Vcc) when the serial data is 1, and demonstrates the L-level representing the ground potential (0 V) when the serial data is 0.

The modulation circuit 330 generates the first modulated signal and the second modulated signal, and applies the first modulated signal and the second modulated signal between the first conductive layer and the second conductive layer. The first modulated signal is a signal that is obtained by ON-OFF modulating a first carrier wave with the first clock signal. The first carrier wave is a carrier wave that has a first frequency. The first carrier wave is generated by a first oscillation circuit. In one example, the first oscillation circuit is the oscillation circuit 361. The second modulated signal is a signal that is obtained by ON-OFF modulating a second carrier wave with the first data signal. The second carrier wave is a carrier wave that has a second frequency different from the first frequency. The second carrier wave is generated by a second oscillation circuit. In one example, the second oscillation circuit is the oscillation circuit 362.

The modulation circuit 330 includes a switch 331, a switch 332, and a switch control circuit 333. The switch 331 is a switch for controlling conduction and interruption to the conductive layer 111 of the first carrier wave generated by the oscillation circuit 361. The switch 332 is a switch for controlling conduction and interruption to the conductive layer 111 of the second carrier wave generated by the oscillation circuit 362. The switch control circuit 333 is a circuit that controls the state of the switch 331 and the state of the switch 332. In one example, the switch control circuit 333 controls the switch 331 to an interrupted state when the first clock signal is the L-level, and controls the switch 331 to a conduction state with the first clock signal is the H-level. In one example, the switch control circuit 333 controls the switch 332 to the interrupted state when the first data signal is the L-level, and controls the switch 332 to the conduction state with the first data signal is the H-level.

The oscillation circuit 361 is a circuit that generates the first carrier wave that has the first frequency. The oscillation circuit 362 is a circuit that generates the second carrier wave that has the second frequency. In the present embodiment, the first frequency is 5 MHz, and the second frequency is 2 MHz Additionally, the clock frequency of the I2C communication, that is, the frequency of the first clock signal, is 10 kHz.

The bandpass filter 371 is a filter that allows signals that have the first frequency to pass, and that blocks signals that have frequencies other than the first frequency. Specifically, the bandpass filter 371 is a filter that allows the first carrier wave to pass, and that blocks the passage of the second carrier wave, harmonics of the first carrier wave and the second carrier wave, and the like. The bandpass filter 372 is a filter that allows signals that have the second frequency to pass, and that blocks signals that have frequencies other than the second frequency. Specifically, the bandpass filter 372 is a filter that allows the second carrier wave to pass, and that blocks the passage of the first carrier wave, harmonics of the first carrier wave and the second carrier wave, and the like.

Next, the configuration of the communication device 400 is described. The communication device 400 includes a control circuit 410, a communication circuit 420, a demodulation circuit 440, and a second communication circuit 450.

The control circuit 410 controls the operations of the entire communication device 400. In one example, the control circuit 410 controls the communication target device 500 via the second communication circuit 450 on the basis of the serial data supplied from the communication circuit 420.

The communication circuit 420 is a communication circuit for realizing I2C communication. The communication circuit 420 acquires the serial data on the basis of a second clock signal and a second data signal generated by the demodulation circuit 440. In other words, the communication circuit 420 is a data acquisition circuit.

The demodulation circuit 440 includes a buffer amplifier 441 that has high input impedance and that is connected to a transmission path including the conductive layer 111 and the conductive layer 112. The demodulation circuit 440 is connected to the transmission path via this buffer amplifier 441. It is preferable that the input impedance of the buffer amplifier 441 is sufficiently higher than the output impedance of the oscillation circuit 361 and the output impedance of the oscillation circuit 362. In this case, it is possible to receive the first modulated signal and the second modulated signal, even if a plurality of buffer amplifiers 441 is connected in parallel to the transmission path. That is, in the present embodiment, each individual input impedance of the demodulation circuit 440 of the communication device 400 connected to the transmission path is high and, as such, normal communication operations can be realized even if multiple communication devices 400 are connected in parallel to the transmission path.

Here, the demodulation circuit 440 demodulates the first modulated signal that is applied between the conductive layer 111 of the first conductor and the conductive layer 112 of the second conductor, and generates the second clock signal. In one example, the demodulation circuit 440 acquires, via a bandpass filter similar to the bandpass filter 371, the first modulated signal applied between the conductive layer 111 and the conductive layer 112. Then, the demodulation circuit 440 determines whether the first modulated signal has amplitude, and generates the second clock signal. The second clock signal is basically a signal similar to the first clock signal, and is a digital signal corresponding to the serial clock. Note that, in one example, the second clock signal is a signal that is the L-level when the first modulated signal does not have amplitude, and is the H-level when the first modulated signal has amplitude. That is, the second clock signal is a signal that is the H-level when the first clock signal is the H-level, and is the L-level when the first clock signal is the L-level.

The demodulation circuit 440 demodulates the second modulated signal applied between the conductive layer 111 and the conductive layer 112, and generates the second data signal. In one example, the demodulation circuit 440 acquires, via a bandpass filter similar to the bandpass filter 372, the second modulated signal applied between the conductive layer 111 and the conductive layer 112. Then, the demodulation circuit 440 determines whether the second modulated signal has amplitude, and generates the second data signal. The second data signal is basically a signal similar to the first data signal, and is a digital signal corresponding to the serial data. Note that, in one example, the second data signal is a signal that is the L-level when the second modulated signal does not have amplitude, and is the H-level when the second modulated signal has amplitude. That is, the second data signal is a signal that is the H-level when the first data signal is the H-level, and is the L-level when the first data signal is the L-level.

The second communication circuit 450 is a communication circuit for enabling the communication device 400 to communicate with the communication target device 500. The second communication circuit 450 sends, in accordance with control by the control circuit 410, information for controlling the communication target device 500 to the communication target device 500. The communication target device 500 operates in accordance with the information received from the second communication circuit 450.

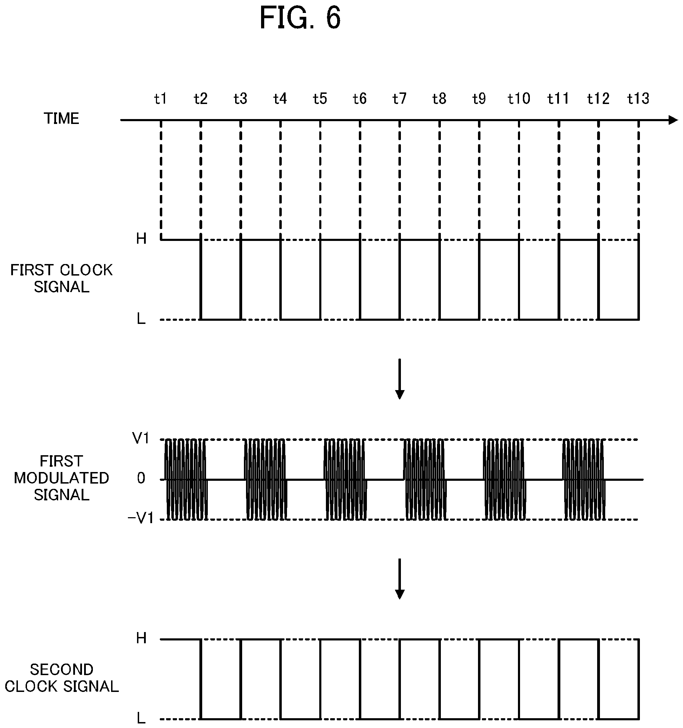

Next, the manner in which the clock signal changes is described while referencing FIG. 6. Firstly, the communication circuit 320 generates the first clock signal that is a digital signal corresponding to the serial clock. This first clock signal is converted to the first modulated signal by the modulation circuit 330. The first modulated signal superimposed between the conductive layer 111 and the conductive layer 112 is converted to the second clock signal by the demodulation circuit 440. This second clock signal is used when the communication circuit 420 acquires the serial data from the second data signal.

Here, in one example, when the first clock signal is the H-level, the first modulated signal has amplitude and the second clock signal is the H-level. Meanwhile, in one example, when the first clock signal is the L-level, the first modulated signal does not have amplitude and the second clock signal is the L-level.

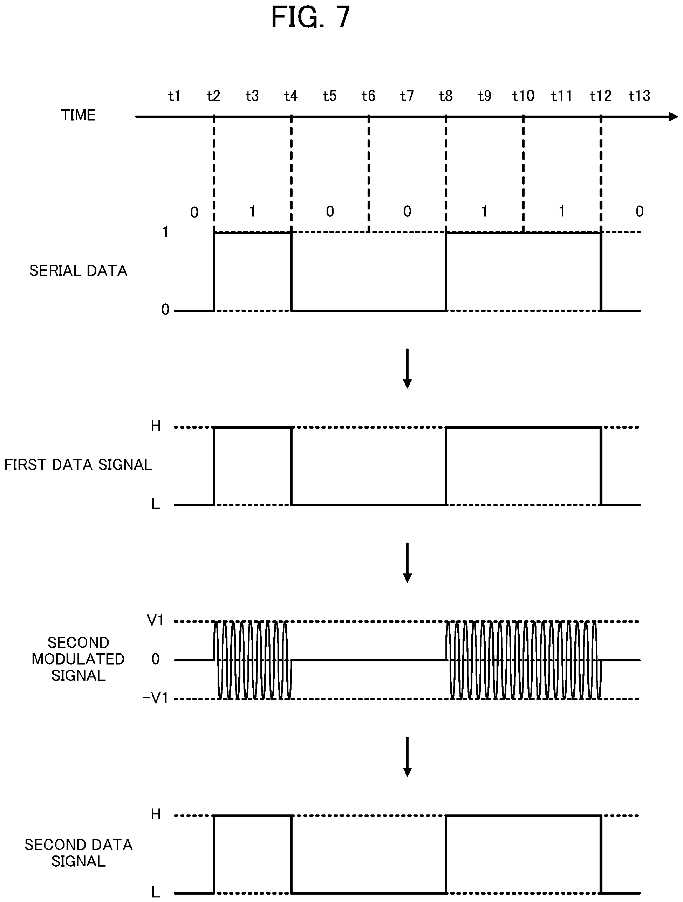

Next, the manner in which the data signal changes is described while referencing FIG. 7. This serial data is converted to the first data signal by the communication circuit 320. This first data signal is converted to the second modulated signal by the modulation circuit 330. The second modulated signal superimposed between the conductive layer 111 and the conductive layer 112 is converted to the second data signal by the demodulation circuit 440. This second data signal is converted to serial data by the communication circuit 420.

Here, in one example, when the serial data is 1, the first data signal is the H-level, the second modulated signal has amplitude, and the second data signal is the H-level. Meanwhile, in one example, when the serial data is 0, the first data signal is the L-level, the second modulated signal does not have amplitude, and the second data signal is the L-level.

Next, descriptions are given of the first frequency and the second frequency. The first modulated signal that has the first frequency and the second modulated signal that has the second frequency are simultaneously applied between the conductive layer 111 and the conductive layer 112. Accordingly, it is preferable that the difference between the first frequency and the second frequency is greater than or equal to a threshold. In one example, this threshold is determined in consideration of the performance of the bandpass filter, the perspective of EMC, and the like.

The first carrier wave that has the first frequency is ON-OFF modulated by the first clock signal, and the second carrier wave that has the second frequency is ON-OFF modulated by the first data signal. Accordingly, the first frequency must be sufficiently higher than the frequency of the first clock signal. Likewise, the second frequency must be sufficiently higher than the frequency of the first data signal. As such, it is preferable to increase the first frequency and the second frequency to increase the communication speed of the I2C communication.

However, the wavelength of the first modulated signal that has the first frequency shortens as the first frequency increases. Moreover, in a case in which the wavelength of the first modulated signal is shorter than the length between two points separated the farthest from each other on the fiber structure 110, a standing wave is generated on the fiber structure 110. If a standing wave is generated on the fiber structure 110, locations develop where the first modulated signal attenuates, and the possibility of the communication device 300 and the communication device 400 not being able to normally communicate increases. Accordingly, it is preferable that the wavelength of the first modulated signal is sufficiently long with respect to the length of the fiber structure 110. Note that the wavelength of the first modulated signal is basically the wavelength of the first modulated signal when the first modulated signal propagates through the fiber structure 110, and is shorter than the wavelength in vacuum of the first modulated signal. The same is true for the wavelength of the second modulated signal.

As the capacitance between the conductive layer 111 and the conductive layer 112 increases or, as the first frequency increases, the impedance between the conductive layer 111 and the conductive layer 112 decreases, and the first modulated signal attenuates. The same is true for the second modulated signal. Here, it may not be possible to significantly reduce the capacitance between the conductive layer 111 and the conductive layer 112 due to various restrictions. Additionally, it may not be possible to significantly lower the first frequency due to restrictions such as communication speed and the like.

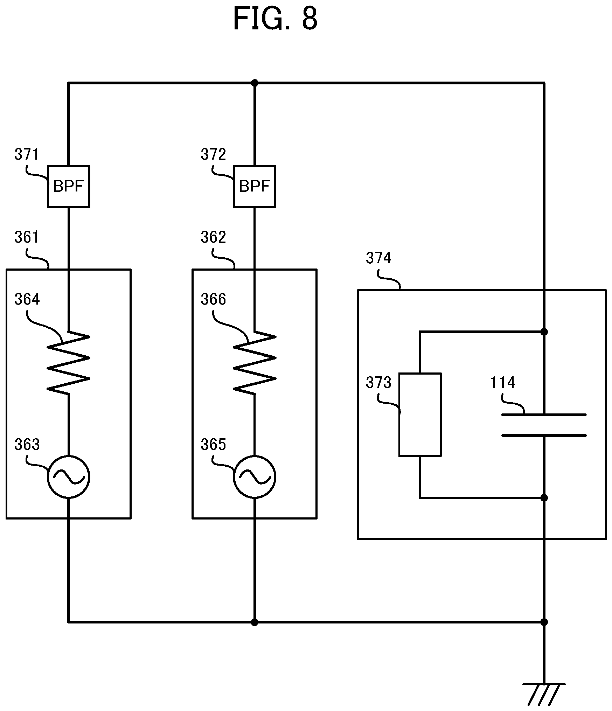

In such a case, as illustrated in FIG. 8, it is preferable to provide a filter circuit 373 in parallel with a capacitor 114 constituted by the conductive layer 111 and the conductive layer 112, and increase the parallel combined impedance at the first frequency and the second frequency of a parallel circuit 374 including the capacitor 114 and the filter circuit 373. Such a configuration is expected to result in an increase in the gain at the first frequency and the second frequency, and a decrease in the attenuation rates of the first modulated signal and the second modulated signal. Note that FIG. 8 illustrates an example in which the oscillation circuit 361 is divided into an ideal oscillation circuit 363 that does not include an internal resistor 364 and the internal resistor 364, and the oscillation circuit 362 is divided into and an ideal oscillation circuit 365 that does not include an internal resistor 366 and the internal resistor 366. The filter circuit 373 is a circuit that includes a plurality of inductors and a plurality of capacitors, for example.

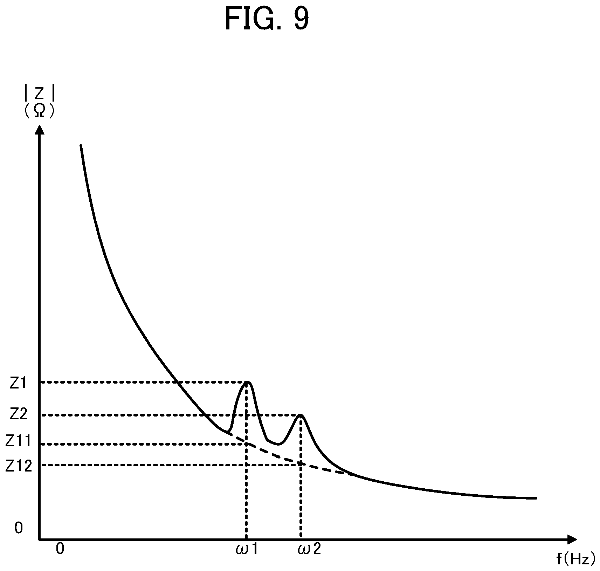

FIG. 9 illustrates the relationship between the frequency of the signal and the parallel combined impedance of the parallel circuit 374. As illustrated in FIG. 9, basically, the parallel combined impedance of the parallel circuit 374 decreases as the frequency of the signal increases. However, FIG. 9 also illustrates that the parallel combined impedance relatively increases at the first frequency and the second frequency due to the selection of the filter circuit 373.

According to the present embodiment, it is possible to carry out serial communication, by appropriately using clock signals and data signals, among a plurality of communication devices, by using the two conductive layers of the fiber structure 110.

### Embodiment 2

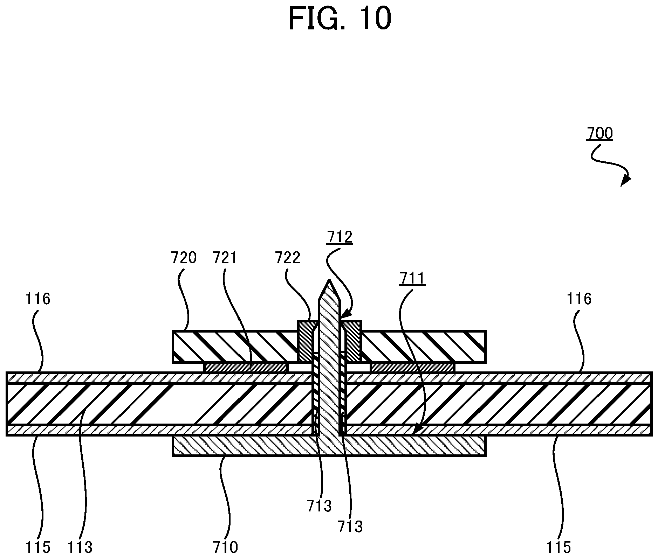

In Embodiment 1, an example is described in which a conductive layer 111 in which mesh-like openings are formed is used as the first conductive layer, and a conductive layer 112 in which mesh-like openings are formed is used as the second conductive layer. As illustrated in FIG. 10, a configuration is possible in which a conductive layer 115 that does not include openings is used as the first conductive layer, and a conductive layer 116 that does not include openings is used as the second conductive layer.

With such a configuration, when the tack 710 described in Embodiment 1 is inserted into the fiber structure 110, there is a possibility that the tack 710 may contact the conductive layer 116, and a short may occur between the conductive layer 115 and the conductive layer 116. As such, in the present embodiment, as illustrated in FIG. 10, a portion of the tack 710 is covered by an insulator 713. In this case, the insulator 713 contacts the conductive layer 116 and prevents the tack 710 from contacting the conductive layer 116.

### Embodiment 3

In Embodiment 1, an example is described in which data is sent from the communication device 300 to the communication device 400, and data is not sent from the communication device 400 to the communication device 300. In a case such as when the communication target device 500 is a sensor instead of an actuator, it may be desired to send data from the communication device 400 to the communication device 300. In such a case, it is preferable that the communication device 300 is provided with a demodulation function, and the communication device 400 is provided with a modulation function.

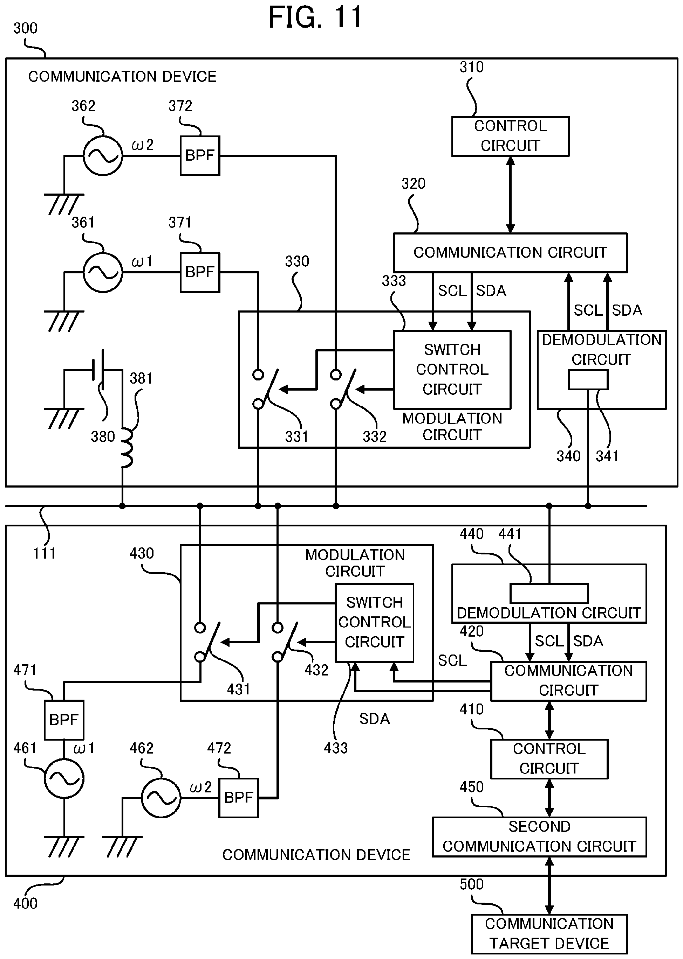

In one example of such a case, as illustrated in FIG. 11, the communication device 300 includes a demodulation circuit 340. The functions of the demodulation circuit 340 are basically the same as the functions of the demodulation circuit 440. That is, the demodulation circuit 340 includes a buffer amplifier 341 that has high input impedance and is connected to a transmission path including the conductive layer 111 and the conductive layer 112. The demodulation circuit 340 is connected to the transmission path via this buffer amplifier 341. Additionally, the communication device 400 includes a modulation circuit 430, an oscillation circuit 461, an oscillation circuit 462, a bandpass filter 471, and a bandpass filter 472. The features of the modulation circuit 430, the features of the oscillation circuit 461, the features of the oscillation circuit 462, the features of the bandpass filter 471, and the features of the bandpass filter 472 are, respectively, basically the same as the features of the modulation circuit 330, the features of the oscillation circuit 361, the features of the oscillation circuit 362, the features of the bandpass filter 371, and the features of the bandpass filter 372. The modulation circuit 430 includes a switch 431, a switch 432, and a switch control circuit 433.

According to this configuration, the communication device 400 can send data to the communication device 300. Additionally, the communication device 400 can send an ACK to the communication device 300. Moreover, the communication device 400 can notify the communication device 300 of the busy state.

### Embodiment 4

In Embodiment 3, an example is described in which the communication device 400 is provided with the oscillation circuit 462 and the like so that the communication device 400 can send not only the first data signal, but also the first clock signal. However, it is sufficient that the communication device 300 that is the master sends the first clock signal, and the communication device 400 that is a slave need not send the first clock signal.

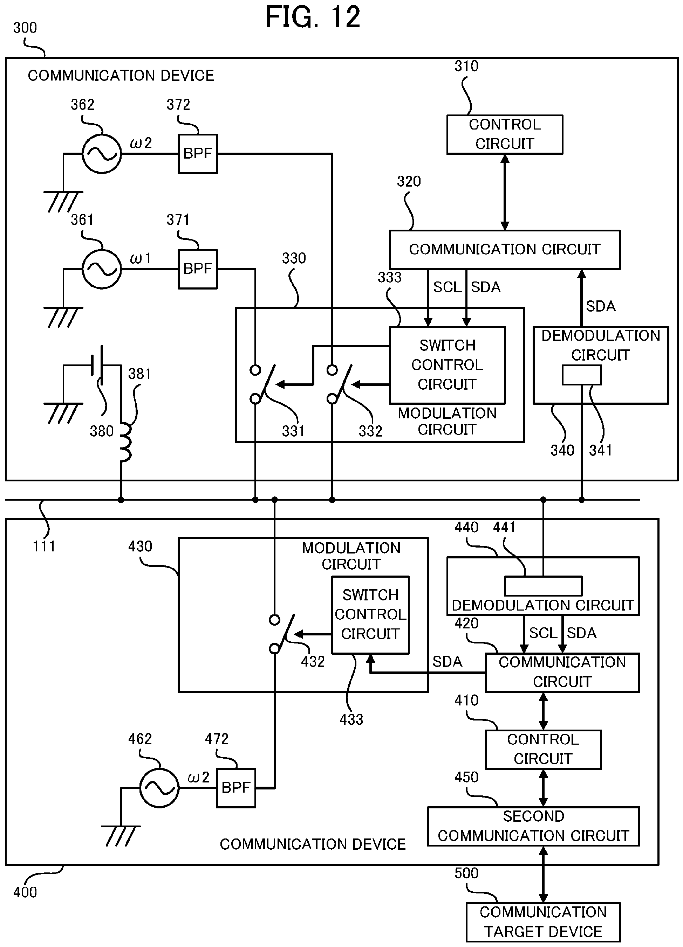

In this case, as illustrated in FIG. 12, the communication device 400 need not include the oscillation circuit 461 and the bandpass filter 471. Additionally, the demodulation circuit 340 need not have a function for demodulating the SCL. Moreover, the modulation circuit 430 need not include the switch 431.

With this configuration as well, although the communication device 400 cannot notify the communication device 300 of the busy state, the communication device 400 can send data to the communication device 300.

### Modified Examples

Embodiments of the present disclosure are described above. However, various modifications and applications are possible when implementing the present disclosure.

In the present disclosure, any part of the configurations, functions, and operations described in the embodiments described above may be adopted as desired. Additionally, in the present disclosure, an additional configuration, function, or operation may be adopted apart from the configurations, functions, and operations described above. Furthermore, the embodiments described above may be combined as desired. Moreover, the numbers of the constituents in the embodiments described above can be adjusted, as appropriate. Additionally, the materials, sizes, electrical characteristics, and the like usable in the present disclosure are not limited to those mentioned in the embodiments described above.

For example, the communication target device 500 may be a light emitting device that includes an LED or the like.

In Embodiment 1, an example is described in which ON-OFF modulation is used as the digital modulation. Various types of digital modulation other than ON-OFF modulation can be used. Examples thereof include amplitude shift keying (ASK) modulation, frequency shift keying (FSK) modulation, phase shift keying (PSK) modulation, and the like.

In Embodiment 1, an example is described in which the present disclosure is applied to the fiber structure 110 of the clothing article 100. However, the fiber structure 110 to which the present disclosure is applied is not limited to the fiber structure 110 of the clothing article 100. For example, a configuration is possible in which the present disclosure is applied to a fiber structure 110 provided on a seat or a bed in a vehicle or facility. Examples of the vehicle include cars, trains, airplanes, and the like. Examples of the facility include entertainment facilities, schools, hospitals, and the like. Alternatively, a configuration is possible in which the present disclosure is applied to a fiber structure 110 provided on a piece of furniture or medical equipment.

A configuration is possible in which, instead of the fiber structure 110, the present disclosure is applied to a structure that is constituted from a material other than fiber and that includes a plurality of conductive layers. Additionally, a configuration is possible in which the present disclosure is applied to a plurality of conductors that are not arranged in a laminated form. For example, the present disclosure may be applied to two electrical wires.

The description of Embodiment 1is based on a premise of the functions of the communication devices 300, 400 being realized by software (or firmware), that is, a premise of many of the functions of the communication devices 300, 400 being realized by a processor executing a program. However, in the present disclosure, a configuration is possible in which such functions are realized by hardware. In such a case, the communication devices 300, 400 include processing circuits instead of processors, for example. Such processing circuits are constituted by a single circuit, a composite circuit, a programmed processor, a parallel programmed processor, an application specific integrated circuit (ASIC), a field programmable gate array (FPGA), or a combination thereof.

An operation program defining the operations of the communication devices 300, 400 according to the present disclosure can be applied to an existing personal computer, information terminal device, or the like to cause that personal computer or the like to function as the communication devices 300, 400 according to the present disclosure. Any distribution method of such a program can be used. For example, the program may be stored and distributed on a non-transitory computer-readable recording medium such as a compact disc read-only memory (CD-ROM), a digital versatile disk (DVD), or a memory card, or may be distributed via a communication network (for example, the internet).

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2018-159542, filed on August 28, 2018, the entire disclosure of which is incorporated by reference herein.

### Reference Signs List

- 100: Clothing article
- 110: Fiber structure
- 111, 112, 115, 116: Conductive layer
- 113: Insulation layer
- 114: Capacitor
- 200: Integration module
- 300, 400: Communication device
- 310, 410: Control circuit
- 320, 420: Communication circuit
- 330, 430: Modulation circuit
- 331, 332, 431, 432: Switch
- 333,433: Switch control circuit
- 340, 440: Demodulation circuit
- 341, 441: Buffer amplifier
- 361, 362, 363, 365, 461, 462: Oscillation circuit
- 364, 366: Internal resistor
- 371, 372, 471, 472: Bandpass filter
- 373: Filter circuit
- 374: Parallel circuit
- 380: DC power supply
- 381: Inductor
- 450: Second communication circuit
- 500: Communication target device
- 600: Circuit board
- 601, 602, 711, 721: Electrode
- 603, 604,: 605 Electrical wire
- 610: Relay board
- 620: Support member
- 700: Attachment member
- 710: Tack
- 712: Protrusion
- 713: Insulator
- 720: Fixed member
- 722: Socket
- 1000: Communication system

## Claims

1. A communication system comprising a plurality of communication devices that communicate via a first conductor and a second conductor, and a DC power supply that supplies DC power to the plurality of communication devices via the first conductor and the second conductor, wherein
a first communication device of the plurality of communication devices including
a signal generation circuit that generates a clock signal that is a digital signal corresponding to a serial clock, and a data signal that is a digital signal corresponding to serial data to be sent,
a first oscillation circuit that generates a first carrier wave having a first frequency,
a second oscillation circuit that generates a second carrier wave having a second frequency different than the first frequency, and
a modulation circuit that generates a first modulated signal obtained by digital modulating the first carrier wave with the clock signal and second modulated signal obtained by modulating the second carrier wave with the data signal, and applies the first modulated signal and the second modulated signal between the first conductor and the second conductor, and
a second communication device of the plurality of communication devices that is different from the first communication device, the second communication device including
a demodulation circuit that includes a buffer amplifier that has high input impedance and that is connected to the first conductor and the second conductor, demodulates the first modulated signal and the second modulated signal applied between the first conductor and the second conductor, and generates the clock signal and the data signal, and
a data acquisition circuit that acquires the serial data on the basis of the clock signal and the data signal generated by the demodulation circuit.

2. The communication system according to claim 1, further comprising:
a fiber structure including a first conductive layer that has conductivity and that includes the first conductor, a second conductive layer that has conductivity and that includes the second conductor, and an insulation layer that insulates the first conductive layer and the second conductive layer.

3. The communication system according to claim 2, further comprising:
a clothing article including the fiber structure.

4. The communication system according to claim 2 or 3, wherein a first wavelength that is a wavelength of the first carrier wave and a second wavelength that is a wavelength of the second carrier wave are longer than a length between two points that are separated farthest from each other on the fiber structure.

5. The communication system according to any one of claims 2 to 4, further comprising:
a filter circuit that is provided parallel to a capacitor including the first conductive layer and the second conductive layer, and that increases a parallel combined impedance between both ends of the capacitor at the first frequency and the second frequency.

6. The communication system according to any one of claims 2 to 5, further comprising:
an integration module that includes a third communication device of the plurality of communication devices, a communication target device that communicates with the third communication device, the communication target device being one selected from an actuator, a light emitting device, and a sensor, a circuit board on which the third communication device and the communication target device are mounted, and an attachment member for attaching the circuit board to the fiber structure, wherein
the attachment member includes
a tack constituted by a conductor, the tack being inserted into the fiber structure from a side of the first conductive layer toward a side of the second conductive layer, and
a fixed member fixed to a protrusion of the tack on the side of the second conductive layer,
the tack includes a first electrode that contacts the first conductive layer,
the fixed member includes a second electrode that contacts the second conductive layer, and a socket into which the protrusion of the tack is inserted, and
the circuit board is connected to the first conductive layer via the first electrode and the socket, and is connected to the second conductive layer via the second electrode.

7. The communication system according to claim 6, wherein
a mesh-like opening is formed in the second conductive layer, and
the tack is inserted into the fiber structure so as to penetrate the opening, and is insulated from the second conductive layer.

8. The communication system according to claim 6, wherein
a portion of the tack is covered with an insulator, and
the insulator contacts the second conductive layer, and the tack is insulated from the second conductive layer.
